# EUROPÄISCHE PATENTANMELDUNG

(11) **EP 2 405 064 A1**
(43) Veröffentlichungstag der Anmeldung: **11.01.2012**
(21) Anmeldenummer: 11171822.7
(22) Anmeldetag: 29.06.2011
(51) Int. Cl.: E03F 5/14, B01D 21/24

(54) **Rückhaltevorrichtung für eine Abwasserbehandlungsanordnung, Konstruktionseinheit gebildet aus Rückhaltevorrichtung und Abwasserbehandlungsanordnung**

(30) Priorität: 06.07.2010 DE 102010030979
(71) Anmelder: FRÄNKISCHE ROHRWERKE Gebr. Kirchner GmbH & Co. KG, 97486 Königsberg (DE)
(72) Erfinder: Adams, Dietmar, 01328 Dresden (DE); Kriese, Jens, 14621 Schönwalde-Glien (DE); Wilhelm Jörg, 72070 Tübingen (DE); Czesch, Christian, 93055 Regensburg (DE); Haase Reinhard, 32689 Kalletal-Hohenhausen (DE); Schütz, Michael, 97475 Zeil/Main (DE)
(74) Vertreter: Herzog, Markus

(57) **Zusammenfassung**

Die Erfindung betrifft eine Rückhaltevorrichtung (10) zur Anbringung an einer sich im Wesentlichen vertikal erstreckenden Wandung (28a) einer Abwasserbehandlungsanordnung (12), wobei die Rückhaltevorrichtung (10) in einer sich im Wesentlichen vertikal erstreckenden Seitenfläche zur Ermöglichung des Eintritts von Abwasser eine Wandung mit einer Öffnung aufweist oder an dieser Seitenfläche offen ist, und wobei die Rückhaltevorrichtung (10) zur Ermöglichung eines Austritts des Abwassers wenigstens eine Überlaufkante (10c) aufweist.

## Beschreibung

Die Erfindung betrifft eine Rückhaltevorrichtung für eine Abwasserbehandlungsanordnung. Ferner betrifft die Erfindung eine Konstruktionseinheit, die aus einer solchen Rückhaltevorrichtung und einer Abwasserbehandlungsanordnung gebildet ist.

Die Behandlung von Abwasser, insbesondere Regenwasser, gewinnt in der heutigen Zeit zunehmend an Bedeutung, vor allem deswegen, weil durch die um sich greifende Urbanisierung immer größere Flächen versiegelt werden. Um eine übermäßig große Ansammlung von Regenwasser auf den versiegelten Flächen zu vermeiden, wird das auf diesen Flächen anfallende Regenwasser in der Regel mittels Gullis oder dergleichen abgeleitet, um einem Kanalisationsnetz zugeführt zu werden. Problematisch hierbei ist jedoch, dass das Regenwasser nicht mehr durch die belebte Oberbodenschicht strömt, um vor Ort im Erdreich zu versickern. Damit entfällt deren reinigende Wirkung durch die Filtrations- und Absorptionsprozesse im Mutterboden. Doch sind gerade Regenabflüsse von befestigten Flächen, wie z. B. Verkehrsflächen, häufig mit Schadstoffen belastet, die nicht ins Grundwasser gelangen dürfen.

Um solche Schadstoffe zumindest teilweise aus dem Abwasser zu entfernen, sind im Stand der Technik verschiedene Abwasserbehandlungsanordnungen vorgeschlagen worden. So ist beispielsweise aus der DE 10 2004 008 960 ein Sedimentationsrohr bekannt, welches dazu geeignet ist, die Sedimentation der in dem Abwasser befindlichen Partikel zu fördern. Ferner ist aus der zum Einreichungszeitpunkt der vorliegenden Anmeldung noch nicht veröffentlichten EP 09 002 449.8 der Anmelderin eine Leichtstoffabscheidevorrichtung bekannt, welche dazu geeignet ist, Leichtstoffe, insbesondere Leichtflüssigkeiten, aus Abwasser zu entfernen. Die Offenbarungen dieser beiden Druckschriften werden hiermit vollinhaltlich in Bezug genommen und zum Teil der Offenbarung der vorliegenden Anmeldung gemacht.

In beiden Fällen durchströmt das Abwasser, beispielsweise Regenwasser, einen sich länglich in Strömungsrichtung erstreckenden Strömungsraum eines Abwasserbehandlungsrohrs, wobei das Abwasserbehandlungsrohr einen strömungsberuhigten Sammelraum aufweist, welcher durch eine Mehrzahl von Öffnungen im Bodenbereich oder im Deckenbereich des Strömungsraums mit diesem in Verbindung steht, und welcher dazu dient, das Abwasser von Sedimentstoffen bzw. Leichtstoffen zu reinigen.

Dabei ist es für einen effizienten Sedimentations- bzw. Leichtstoffabscheideprozess besonders wichtig, dass der Strömungsraum des Abwasserbehandlungsrohrs immer vollständig mit Wasser gefüllt ist, die Anlage also im Dauerstau betrieben wird. Eine geringe Strömungsgeschwindigkeit des Abwassers ist dabei ein besonders begünstigender Faktor. Es hat sich daher in der Praxis als sinnvoll erwiesen, das Abwasser im Abwasserbehandlungsrohr so zurückzuhalten, dass der gesamte Strömungsraum geflutet ist. Hierdurch kann nämlich der gesamte Querschnitt des Strömungsraums senkrecht zur Strömungsrichtung des Abwassers genutzt werden, so dass bei einem vorgegebenen Abwasserdurchsatz die Strömungsgeschwindigkeit minimiert wird.

Im Falle des Sedimentationsrohrs kommt hinzu, dass durch das Zurückhalten des Abwassers im Abwasserbehandlungsrohr auch die Gefahr reduziert wird, dass im strömungsberuhigten Sammelraum bereits angesammelte Sedimentstoffe erneut aufgewirbelt werden. Im Falle des Leichtstoffabscheiderohrs sei zudem angemerkt, dass ein Zurückhalten des Abwassers im Rohr schon deswegen notwendig ist, damit die Leichtstoffe überhaupt durch die Öffnungen im Deckenbereich des Strömungsraums in den strömungsberuhigten Sammelraum gelangen können.

Es ist daher aus dem Stand der Technik bekannt, zum Zurückhalten des Abwassers in einem Abwasserbehandlungsrohr in einem Bereich, welcher dem Abwasserbehandlungsrohr strömungstechnisch unmittelbar nachgelagert ist, eine Stauwand anzuordnen, welche das Regenwasser überwinden muss, um die Abwasserbehandlungsanordnung verlassen zu können. Die Stauwand weist dabei in der Regel eine Überlaufkante auf, die höher angeordnet ist als ein oberer Bereich einer Austrittsöffnung des Strömungsraums des Abwasserbehandlungsrohrs. Insbesondere, wenn sich das Abwasserbehandlungsrohr geradlinig mit Gegengefälle, d. h. mit in Strömungsrichtung negativem Gefälle, erstreckt, bewirkt die Stauwand, dass der gesamte Strömungsraum des Abwasserbehandlungsrohrs stets mit Abwasser gefüllt ist.

In der Vergangenheit wurden häufig große Auffangbecken, zum Beispiel so genannte Absetzschächte, in einem Abwassersystem dafür verwendet, um die Sedimentation von im Abwasser mitgeführten Sedimentstoffen zu fördern. Derartige Auffangbecken weisen jedoch nur eine beschränkte Wirksamkeit beim Zurückhalten von feinen Sedimentstoffen als Träger von Schadstoffen auf. Daher besteht zunehmend der Wunsch, das Abwassersystem mit einer Abwasserbehandlungsanordnung, wie beispielsweise das bereits erwähnte, aus der DE 10 2004 008 960 bekannte Sedimentationsrohr, nachzurüsten, so dass die Sedimentation hauptsächlich in der Abwasserbehandlungsanordnung stattfinden kann, welche besser in der Lage ist, feine Sedimentstoffe zurückzuhalten.

Wird aber ein bestehendes Abwasserkanalsystem, beispielsweise aus dem oben genannten Grund, mit einer eingangs beschriebenen Abwasserbehandlungsanordnung nachgerüstet, so kommt es häufig vor, dass das Abwasserbehandlungsrohr weit oberhalb eines Bodenabschnitts eines Beckens, insbesondere Auffangbeckens, oder eines sich im Wesentlichen vertikal erstreckenden Schachts einmündet. In einem solchen Fall ist dann das Einziehen einer aus dem Stand der Technik bekannten Stauwand zum Zurückhalten des Abwassers in dem Abwasserbehandlungsrohr, sehr aufwendig. Die Stauwand muss nämlich von dem Boden des Beckens bzw. Schachtes entsprechend hoch und zugleich massiv ausgebildet werden, damit sie dem der Höhe entsprechenden Wasserdruck standhalten kann. Dies gilt besonders dann, wenn ein zu dem Becken bzw. Schacht gehöriger Abwasserablauf deutlich tiefer angeordnet ist als die Austrittsöffnung des in das Becken bzw. den Schacht einmündenden Abwasserbehandlungsrohrs. Der technische Aufwand und die mit der Errichtung einer solchen Stauwand verbundenen Kosten stellen einen nicht zu unterschätzenden Nachteil bei der nachträglichen Installation einer Abwasserbehandlungsanordnung in einem bereits bestehenden Kanalsystem dar.

Es ist daher Aufgabe der vorliegenden Erfindung, die Nachrüstung einer Abwasserbehandlungsanordnung in einem bestehenden Kanalsystem mit einfachen und kostengünstigen Mitteln zu ermöglichen.

Diese Aufgabe wird erfindungsgemäß durch eine Rückhaltevorrichtung zur Anbringung an einer sich im Wesentlichen vertikal erstreckenden Wandung einer Abwasserbehandlungsanordnung gelöst, wobei die Rückhaltevorrichtung in einer sich im Wesentlichen vertikal erstreckenden Seitenfläche zur Ermöglichung des Eintritts von Abwasser eine Wandung mit einer Öffnung aufweist oder an dieser Seitenfläche offen ist, und wobei die Rückhaltevorrichtung zur Ermöglichung eines Austritts des Abwassers wenigstens eine Überlaufkante aufweist.

Die erfindungsgemäße Rückhaltevorrichtung kann in einfacher Weise an einer sich im Wesentlichen vertikal erstreckenden Wandung der Abwasserbehandlungsanordnung angeordnet werden. Daher ist es nicht mehr nötig, in dem Bereich, welcher dem Abwasserbehandlungsrohr strömungstechnisch nachgeordnet ist, beispielsweise einem Schacht, insbesondere Wartungsschacht, oder einem Becken, insbesondere Auffangbecken, eine Staumauer einzuziehen. Zudem kann die erfindungsgemäße Rückhaltevorrichtung stets gleich ausgebildet sein, unabhängig davon, in welcher Höhe über dem Boden des Schachts bzw. Beckens sich die Austrittsöffnung des Abwasserbehandlungsrohrs befindet. Ferner wird die Größe der erfindungsgemäßen Rückhaltevorrichtung nicht von der Größe des Raums bestimmt, in den das Abwasserbehandlungsrohr mündet, sondern im Wesentlichen lediglich von der Größe der Austrittsöffnung des Abwasserbehandlungsrohrs.

Die erfindungsgemäße Rückhaltevorrichtung kann aus unterschiedlichen Materialien gefertigt sein, beispielsweise Kunststoff, Metall oder Beton. Ferner können zur Anbringung der Rückhaltevorrichtung an der sich im Wesentlichen vertikal erstreckenden Wandung der Abwasserbehandlungsanordnung diverse, dem Fachmann an sich bekannte Verfahren eingesetzt werden, beispielsweise eine Verschraubung.

Fertigungstechnisch ist es von Vorteil, wenn die Gestalt der Rückhaltevorrichtung eine einfache geometrische Grundform aufweist, beispielsweise die Form eines Quaders oder einer Viertelkugel oder eines Halbzylinders, oder von einer derartigen einfachen geometrischen Grundform abgeleitet ist. Derartige Formen lassen sich nämlich relativ leicht und kostengünstig durch bekannte Umformtechniken, durch Gießen oder auch mittels einfacher Schweißkonstruktionen herstellen. Dabei weisen die Grundformen mit einer kontinuierlich gewölbten Oberfläche den Vorteil auf, dass sich weniger Spannungsspitzen in dem Bauteil bilden, wenn das Abwasser gegen die Wandung andrückt, da sie nur wenige oder gar keine scharfe Kanten haben.

Die erfindungsgemäße Rückhaltevorrichtung kann nicht nur in einer neu errichteten Abwasserbehandlungsanordnung eingesetzt werden, sondern sie lässt sich in der Regel auch problemlos in bereits bestehenden Abwasserbehandlungsanordnungen nachrüsten. Es kann jedoch unter Umständen vorkommen, dass hierzu unmittelbar an der sich im Wesentlichen vertikal erstreckenden Wandung der Abwasserbehandlungsanordnung, an welcher die Rückhaltevorrichtung angebracht wird, insbesondere nach oben hin, nicht ausreichend Platz zur Verfügung steht. Ferner kann die Zugänglichkeit der Rückhaltevorrichtung erschwert sein, wenn sie sich nicht vertikal direkt unterhalb der Schachtöffnung befindet. In diesen Fällen ist es vorteilhaft, wenn die Rückhaltevorrichtung einen sich im montierten Zustand im Wesentlichen horizontal erstreckenden Rohrabschnitt umfasst, welcher von in die Rückhaltevorrichtung eintretendem Abwasser durchströmt wird. Der sich im Wesentlichen horizontal erstreckende Rohrabschnitt kann somit als eine Art Abstandsstück zwischen der sich im Wesentlichen vertikal erstreckenden Wandung der Abwasserbehandlungsanordnung und einem die wenigstens eine Überlaufkante umfassenden Hauptabschnitt der Rückhaltevorrichtung dienen. Auf diese Weise kann, beispielsweise durch Variation der Länge des Abstandsstücks, die erfindungsgemäße Rückhaltevorrichtung flexibel an die örtlichen Gegebenheiten einer bereits bestehenden Abwasserbehandlungsanordnung angepasst werden.

Für eine Effizienzerhöhung der Abwasserbehandlungsanordnung wird ferner vorgeschlagen, dass die Rückhaltevorrichtung einen Aufnahmeraum zur Aufnahme eines Abwasserbehandlungsmediums umfasst, wobei der Aufnahmeraum derart gebildet und/oder angeordnet ist, dass er zumindest von einem Teil des Abwassers, vorzugsweise von dem gesamten Abwasser, durchströmt wird. Zwar ist das die Rückhaltevorrichtung durchströmende Abwasser in der Regel bereits mittels des der Rückhaltevorrichtung strömungstechnisch vorgelagerten Abwasserbehandlungsrohrs von groben und feinen Fremdstoffen gereinigt worden, jedoch kann es wünschenswert sein, auch feinste Partikel zurückzuhalten und gelöste Stoffe zu absorbieren, welche von dem Abwasserbehandlungsrohr nicht aus dem Abwasser entfernt werden konnten. Aus diesem Grund wird ferner vorgeschlagen, ein geeignetes Filtermedium als Abwasserbehandlungsmedium in dem Aufnahmeraum der Rückhaltevorrichtung vorzusehen, welches in der Lage ist, feinste Partikel aus dem Abwasser zurückhalten und ggf. sogar gelöste Stoffe zu absorbieren. In dem Abwasserbehandlungsmedium fallen die zurückgehaltenen bzw. ab- oder adsorbierten Schadstoffe an definierter Stelle an und können von dort in einfacher Weise umweltgerecht entsorgt werden. Somit stellen derartige Filter eine ideale Ergänzung zur Behandlung des Abwassers in einem Abwasserbehandlungsrohr dar.

Der Aufnahmeraum kann dabei zunächst auch nur rein vorsorglich, d.h. ohne tatsächlich ein Filtermedium aufzunehmen, bereitgestellt werden. Sollten später dann strengere Anforderungen an den Gewässerschutz dies erforderlich machen, so kann die erfindungsgemäße Rückhaltevorrichtung ohne größeren technischen Aufwand leicht mit einem Filtermedium in dem hierzu bereits vorgesehenen Aufnahmeraum nachgerüstet werden.

Als Abwasserbehandlungsmedium, insbesondere Filtermaterial, kommen die unterschiedlichsten Materialien in Frage, wobei beispielsweise auch an eine Schichtung verschiedener Materialien gedacht werden kann, so dass eine Schicht bevorzugt feinste Partikel filtert, während eine andere Schicht bevorzugt gelöste Stoffe aus dem Abwasser ab- oder adsorbiert. Selbstverständlich muss der Filter regelmäßig gereinigt bzw. gewechselt werden, da seine hydraulische Leistung durch allmähliches Zusetzen sinkt, bzw. sich die Bindekapazität zum Beispiel gegenüber gelösten Stoffen allmählich erschöpft. Vorteilhafterweise kann das Filtermaterial so gewählt werden, dass auch unter widrigen Bedingungen, d.h. wenn der Filter stark zugesetzt ist oder/und wenn ein hohes Abwasseraufkommen vorliegt, z.B. im Fall von Starkregen, nicht die Gefahr besteht, dass es in einem der Rückhaltevorrichtung strömungstechnisch vorgelagerten Abwassersystem zu einem unzulässig großem Rückstau kommt. Um diese Gefahr zu vermeiden, kann alternativ oder zusätzlich daran gedacht werden, eine Art Notüberlauf an der Rückhaltevorrichtung vorzusehen, durch welche das Abwasser notfalls die Rückhaltevorrichtung verlassen kann.

Weiterbildend wird vorgeschlagen, dass der Aufnahmeraum zumindest abschnittsweise von einem Rost begrenzt ist. Unter dem Begriff "Rost" ist in dieser Anmeldung ein im Wesentlichen flächiges Bauteil zu verstehen, welches eine Mehrzahl von Durchtrittsöffnungen aufweist, wie beispielsweise ein Drahtsieb, ein Lochblech oder eine Gitterstruktur mit unidirektional oder multidirektional verlaufenden Gitterstreben. Der Rost sollte dabei derart gewählt werden, dass er einen möglichst geringen Strömungswiderstand aufweist, wobei er zugleich zuverlässig das Abwasserbehandlungsmedium zurückhalten können muss. Dabei kann es unter Umständen wünschenswert sein, den Aufnahmeraum abschnittsweise, insbesondere nach oben hin, nicht von einem Rost zu begrenzen, so dass auf einfache Weise loses Filtermaterial durch den Rost-freien Abschnitt eingebracht und bei Bedarf später, beispielsweise vermittels eines üblichen Saug-/Spülfahrzeugs durch Absaugen, wieder ausgebracht werden kann.

Alternativ hierzu kann es jedoch unter Umständen bevorzugt werden, dass der Aufnahmeraum vollständig von dem Rost begrenzt ist. Somit kann das Abwasserbehandlungsmedium, insbesondere das Filtermedium, auf einfache Weise zusammen mit dem Rost in die Rückhaltevorrichtung eingebracht oder/und zu Reinigungszwecken wieder aus dieser entfernt werden. Beispielsweise kann daran gedacht sein, das Abwasserbehandlungsmedium in einem geschlossenen, ggf. auch in einem nach oben hin offenen, Drahtkorb oder allgemein in einem wasserdurchlässigen Behälter, beispielsweise in Form einer Filterpatrone oder dergleichen, an einem Seil von oben in die Rückhaltevorrichtung ein- bzw. auszuführen.

Besonders vorteilhaft ist es, wenn der Aufnahmeraum für das Abwasserbehandlungsmedium derart in der Rückhaltevorrichtung angeordnet ist, dass er in einer im Wesentlichen vertikalen Richtung von unten nach oben von dem Abwasser durchströmt wird. Bei einer Durchströmung des Abwasserbehandlungsmediums in einer anderen Richtung, beispielsweise von oben nach unten, besteht nämlich ansonsten, insbesondere bei kleinen Durchsatzmengen, die Gefahr, dass der Filter nicht über seinen gesamten Querschnitt durchströmt wird, sondern dass sich demgegenüber nur relativ kleine Strömungspfade bilden, was einer gewünschten, möglichst gleichmäßigen Durchströmung des Abwasserbehandlungsmediums hinderlich ist. Ferner wird durch die oben beschriebene Anordnung das etwaig in dem Aufnahmeraum vorhandene Abwasserbehandlungsmedium, das infolge der Schwerkraft zu komprimieren neigt, durch das es durchströmende Abwasser aufgelockert, wodurch die Abwasserbehandlungsleistung ebenfalls erhöht werden kann.

Der Aufnahmeraum für das Abwasserbehandlungsmedium befindet sich vorzugsweise unterhalb der, oder bestenfalls auf gleicher Höhe wie die Überlaufkante der Rückhaltevorrichtung, wodurch sichergestellt werden kann, dass das Abwasserbehandlungsmedium, insbesondere das Filtermaterial, stets befeuchtet bleibt und nicht austrocknet. Auf diese Weise kann es seine Abwasserbehandlungswirkung auch dann, wenn es nach einer längeren Trockenzeit wieder zu einem Regenereignis kommt, sofort voll entfalten.

Aus den nachfolgend erläuterten Gründen kann es vorteilhaft sein, wenn die Rückhaltevorrichtung in einem oberen Bereich wenigstens zwei voneinander getrennte Öffnungen aufweist, mittels derer ein von dem Abwasser durchströmter Innenraum der Rückhaltevorrichtung mit der äußeren Umgebung in Verbindung steht, wobei wenigstens eine der Öffnungen zumindest abschnittsweise von einer Begrenzungskante begrenzt ist, die niedriger angeordnet ist als eine niedrigste Begrenzungskante der anderen Öffnungen und somit die wenigstens eine Überlaufkante bildet. Mit anderen Worten bedeutet dies, dass die Rückhaltevorrichtung wenigstens eine Öffnung aufweist, durch die das Abwasser über eine Überlaufkante aus der Rückhaltevorrichtung ausströmt, und dass sie wenigstens eine weitere Öffnung aufweist, durch welche, zumindest im Normalfall, kein Abwasser aus der Rückhaltevorrichtung ausströmt. Diese wenigstens eine weitere Öffnung kann beispielsweise für den Fall, dass die hydraulische Leistung des Filters bei einem über seiner Bemessung liegenden Starkregenereignis nicht ausreicht oder dass ein in der Rückhaltevorrichtung angeordneter Filter stark zugesetzt ist, als Notüberlauf dienen, damit das anfallende Abwasser im gleichen Maß wie es in die Rückhaltevorrichtung einströmt, diese auch wieder verlassen kann, und somit insbesondere kein Rückstau auf der zu entwässernden Fläche eintreten kann.

Ferner könnte auch, sofern das Abwasserbehandlungsrohr zur Abscheidung von Leichtstoffen dient, eine der Öffnungen im oberen Bereich der Rückhaltevorrichtung, deren niedrigste Begrenzungskante höher als die wenigstens eine Überlaufkante der Rückhaltevorrichtung angeordnet ist, mit einem oberen strömungsberuhigten Sammelraum eines Abwasserbehandlungsrohrs in Verbindung stehen. Somit könnten nämlich die Leichtstoffe, insbesondere wenn das der Rückhaltevorrichtung strömungstechnisch vorgelagerte Abwasserbehandlungsrohr mit Gegengefälle, d.h. mit negativem Gefälle in Strömungsrichtung des Abwassers, angeordnet ist, durch eben diese Öffnung aus der Abwasserbehandlungsanordnung entfernt werden.

Gemäß einem weiteren Gesichtspunkt betrifft die Erfindung eine Konstruktionseinheit, die aus einer Abwasserbehandlungsanordnung und einer wie vorstehend beschriebenen Rückhaltevorrichtung gebildet ist, wobei die sich im Wesentlichen vertikal erstreckende Wandung der Abwasserbehandlungsanordnung wenigstens eine Abwasser-Austrittsöffnung aufweist, aus der in die Rückhaltevorrichtung eintretendes Abwasser austritt, wobei die wenigstens eine Überlaufkante der Rückhaltevorrichtung höher als ein am tiefsten gelegener Bereich der wenigstens einen Abwasser-Austrittsöffnung der Abwasserbehandlungsanordnung angeordnet ist. Wäre die wenigstens eine Überlaufkante der Rückhaltevorrichtung auf gleicher Höhe wie oder tiefer als der am tiefsten gelegene Bereich der wenigstens einen Abwasser-Austrittsöffnung der Abwasserbehandlungsanordnung angeordnet, so könnte kein effizientes Zurückhalten des Abwassers in der der Rückhaltevorrichtung vorgelagerten Abwasserbehandlungsanordnung erfolgen.

Es wird ferner vorgeschlagen, bei der vorstehend genannten Konstruktionseinheit die wenigstens eine Überlaufkante der Rückhaltevorrichtung höher als ein am höchsten gelegener Bereich der wenigstens einen Abwasser-Austrittsöffnung der Abwasserbehandlungsanordnung anzuordnen. Hierdurch kann nämlich sichergestellt werden, dass die gesamte Fläche der Abwasser-Austrittsöffnung von Abwasser durchströmt wird, so dass die Strömungsgeschwindigkeit in diesem Bereich relativ gering ist. Ferner bewirkt eine derartige Anordnung der wenigstens einen Überlaufkante der Rückhaltevorrichtung, dass dann, wenn die Abwasserbehandlungsanordnung ein sich geradlinig erstreckendes Leichtstoffabscheiderohr umfasst, welches mit Gegengefälle, d.h. mit einem in Strömungsrichtung negativen Gefälle, angeordnet ist, dieses effizient betrieben werden kann, da der gesamte Deckenbereich des Strömungsraums mit dem Abwasser in Kontakt ist.

Für den Fall, dass die Abwasserbehandlungsanordnung ein Abwasserbehandlungsrohr mit wenigstens einer Abwasser-Austrittsöffnung umfasst, welches in Strömungsrichtung des Abwassers mit positivem Gefälle angeordnet ist, wird ferner vorgeschlagen, die wenigstens eine Überlaufkante der Rückhaltevorrichtung höher als ein am höchsten gelegener Bereich des Abwasserbehandlungsrohrs anzuordnen. Hierdurch wird nämlich durch die Rückhaltevorrichtung sichergestellt, dass auch bei einem mit positiven Gefälle angeordneten Abwasserbehandlungsrohr der Strömungsraum stets geflutet ist, was sich wiederum, wie oben beschrieben ist, positiv auf die Effizienz bei einem Sedimentationsbetrieb auswirkt, bzw. einen Leichtstoffabscheidungsbetrieb unter Umständen überhaupt erst ermöglicht.

Die Erfindung wird im Folgenden an Ausführungsbeispielen anhand der beigefügten Zeichnungen näher erläutert werden. Es stellt dar:
- Fig. 1: eine grobschematische Darstellung einer ersten, schlichten Ausführungsform einer erfindungsgemäßen Rückhaltevorrichtung, zusammen mit einer Abwasserbehandlungsanordnung;
- Fig. 2A: eine vergrößerte, grobschematische Schnittansicht einer ersten Variante der in Fig. 1 gezeigten ersten, schlichten Ausführungsform der erfindungsgemäßen Rückhaltevorrichtungen;
- Fig. 2B: eine vergrößerte grobschematische Schnittansicht einer zweiten Variante der in Fig. 1 gezeigten ersten, schlichten Ausführungs- form der erfindungsgemäßen Rückhaltevorrichtungen;
- Fig. 3A: eine grobschematische Darstellung einer zweiten Ausführungsform der erfindungsgemäßen Rückhaltevorrichtung;
- Fig. 3B: eine grobschematische Darstellung einer Variante der in Fig. 3A gezeigten zweiten Ausführungsform der erfindungsgemäßen Rückhaltevorrichtung;
- Fig. 4A: eine grobschematische Darstellung einer dritten Ausführungsform der erfindungsgemäßen Rückhaltevorrichtung; und
- Fig. 4B: eine grobschematische Darstellung einer Variante der in Fig. 4A gezeigten dritten Ausführungsform der erfindungsgemäßen Rückhaltevorrichtung.

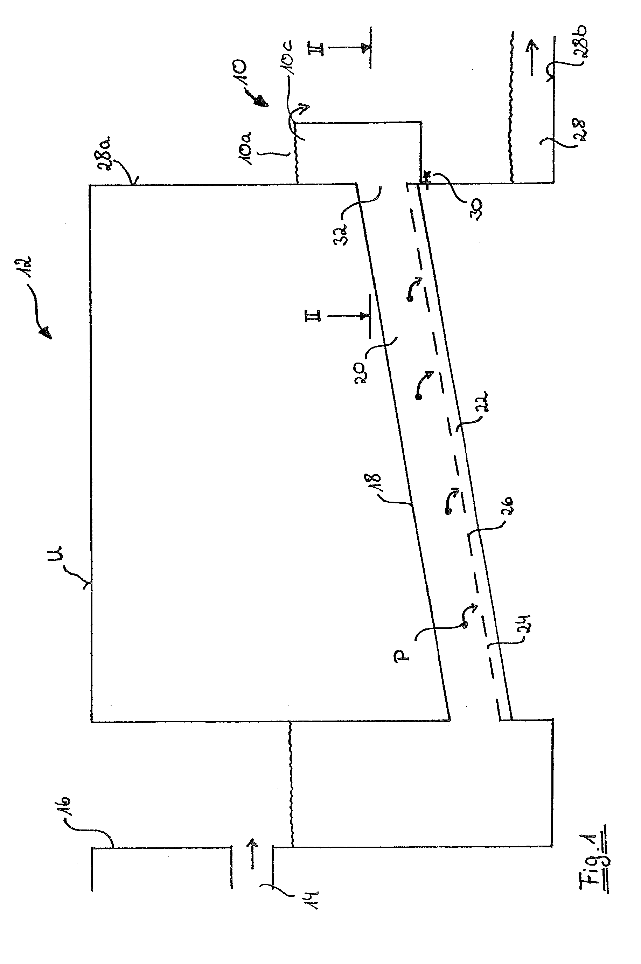

In Fig. 1 ist eine erste, schlichte Ausführungsform einer erfindungsgemäßen Rückhaltevorrichtung grob schematisch dargestellt und ganz allgemein mit 10 bezeichnet. Die Rückhaltevorrichtung 10 ist in eine zur Regenwasserbewirtschaftung genutzte Abwasserbehandlungsanordnung 12 eingebaut und bildet mit dieser eine Konstruktionseinheit. Die Abwasserbehandlungsanordnung 12 umfasst einen Zulauf 14, durch welchen Regenwasser, das bei einem Regenereignis auf der Erdoberfläche U niedergeht und in (nicht dargestellten) Gullis gesammelt wird, in die Abwasserbehandlungsanordnung 12 strömt.

Vom Zulauf 14 gelangt das Regenwasser zunächst in einen sich vertikal erstreckenden Zulaufschacht 16, wo bereits die Sedimentation von groben Partikeln stattfinden kann, sofern diese vom Regenwasser mitgeführt werden. Von dem Zulaufschacht 16 wird das Regenwasser dann in ein Sedimentationsrohr 18 geleitet, in welchem die Sedimentation von Partikeln P mit mittlerer und feiner Größe stattfindet. Das Sedimentationsrohr 18 entspricht in seinem Aufbau und seiner Funktion jenem, welches in der DE 10 2004 008 960 A1 dargestellt und beschrieben ist. Die den Aufbau und die Funktion des Sedimentationsrohrs betreffende Offenbarung der DE 10 2004 008 960 A1 werden daher hiermit, wie eingangs schon erwähnt, vollinhaltlich in Bezug genommen und zum Teil der Offenbarung der vorliegenden Anmeldung gemacht.

Das Sedimentationsrohr 18 umfasst einen Strömungsraum 20 und einen als Sedimentationsraum 22 ausgebildeten strömungsberuhigten Sammelraum, der von dem Strömungsraum 20 durch einen mit Durchbrechungen 24 versehenen Strömungstrenner 26 getrennt ist. Durch die Durchbrechungen 24 können Partikel P, die zusammen mit dem Regenwasser vom Zulaufschacht 16 in den Strömungsraum 20 des Sedimentationsrohrs 18 eingeleitet werden, in den Sedimentationsraum 22 gelangen und sich dort als Sedimentschicht ablagern.

Das Sedimentationsrohr 18 mündet in einer sich im Wesentlichen vertikal erstreckenden Wandung 28a eines Auffangbeckens 28. Das Auffangbecken 28 wurde dabei ursprünglich genutzt, um das Regenwasser im Untergrund zu versickern, bevor die Abwasserbehandlungsanordnung 12 mit dem Sedimentationsrohr 18 nachgerüstet wurde. Jedoch ist auch der Neubau einer derartigen Anlage denkbar. Die erfindungsgemäße Rückhaltevorrichtung 10 ist an der Wandung 28a vermittels einer Mehrzahl von Schraubelementen 30 derart befestigt, dass sie eine Abwasser-Austrittsöffnung 32 des Sedimentationsrohrs, zumindest teilweise, umschließt. Dazu ist die Rückhaltevorrichtung 10 an einer sich im Wesentlichen vertikal erstreckenden Seitenfläche, welche der Wandung 28a zugewandt ist, offen. Somit kann das Regenwasser, welches das Sedimentationsrohr 18 durch die Abwasser-Austrittsöffnung 32 verlässt, in die Rückhaltevorrichtung 10 einströmen.

Zwischen der Rückhaltevorrichtung 10 und der Wandung 28a des Auffangbeckens 18 ist ferner noch ein (hier nicht dargestelltes) Dichtungselement, beispielsweise eine Quetschdichtung, angeordnet, so dass das in die Rückhaltevorrichtung 10 eingeströmte Regenwasser, die Rückhaltevorrichtung 10 nur durch eine obere Öffnung 10a wieder verlassen kann. Dazu muss das Regenwasser in der Rückhaltevorrichtung 10 aber zunächst weiter nach oben aufsteigen, um dann eine an der Rückhaltevorrichtung 10 ausgebildeten Überlaufkante 10c zu überströmen. Die Überlaufkante 10c ist höher als ein am höchsten gelegener Bereich der Abwasser-Austrittsöffnung 32 angeordnet, so dass die Rückhaltevorrichtung 10 zuverlässig bewirkt, dass das gesamte Sedimentationsrohr 18 mit Regenwasser gefüllt ist.

Wenn das Regenwasser die Rückhaltevorrichtung 10 über die Überlaufkante 10c verlassen hat, stürzt es nach unten in das Auffangbecken 28, von wo es versickern oder weiter abfließen kann. Ein Boden 28b des Auffangbeckens 28, ebenso wie der Wasserspiegel im Auffangbecken 28 liegen dabei merklich unterhalb der Abwasser-Austrittsöffnung 32 des Sedimentationsrohrs 18. Ohne die erfindungsgemäße Rückhaltevorrichtung 10, die an der Wandung 28a des Auffangbeckens 28 angebracht ist, wäre es notwendig, wie dies im Stand der Technik bekannt ist, eine entsprechend hohe und massive Stauwand vom Boden 28a des Auffangbeckens 28 zu errichten, um das Abwasser in dem Sedimentationsrohr 18 zurückhalten zu können.

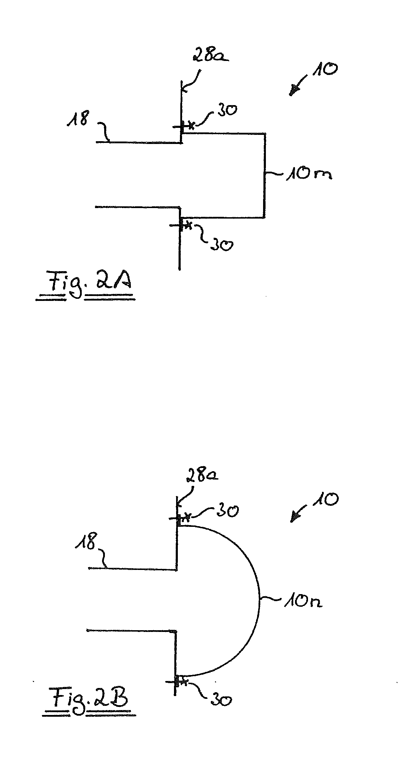

Figuren 2A und 2B zeigen leicht vergrößerte, grobschematische Schnittansichten einer ersten bzw. zweiten Variante der in Fig. 1 gezeigten ersten, schlichten Ausführungsform der erfindungsgemäßen Rückhaltevorrichtungen 10, wobei die Schnittansichten jeweils entlang der Linie II-II von Fig. 1 genommen wurden.

In beiden Figuren ist die sich im Wesentlichen vertikal erstreckende Wandung 28a des Auffangbeckens 28 zu erkennen, sowie ein Abschnitt des Sedimentationsrohrs 18. Die erfindungsgemäße Rückhaltevorrichtung 10 ist jeweils mit den Schraubelementen 30 an der Wandung 28a befestigt, wobei zwischen Rückhaltevorrichtung 10 und Wandung 28a ein (nicht gezeigtes) Dichtungselement vorgesehen ist.

Die in den beiden Figuren gezeigten Varianten unterscheiden sich jedoch hinsichtlich der Form, in welcher die erfindungsgemäße Rückhaltevorrichtung 10 ausgebildet ist. Wie in Fig. 2A zu sehen ist, ist eine Begrenzungswandung 10m bei der ersten Variante der Rückhaltevorrichtung 10 rechtwinklig ausgebildet, so dass die Rückhaltevorrichtung 10 eine im Wesentlichen quaderartige Grundform aufweist. In Fig. 2B ist bei der zweiten Variante der Rückhaltevorrichtung 10 eine Begrenzungswandung 10n hingegen halbrund ausgebildet, so dass die Rückhaltevorrichtung 10 eine im Wesentlichen halbzylindrische Grundform aufweist.

Die runde Begrenzungswandung 10n weist gegenüber der rechteckig ausgebildeten Begrenzungswandung 10m den Vorteil auf, dass sich in ihr aufgrund mangelnder Kanten weniger Spannungsspitzen ausbilden können, wenn das Regenwasser aus dem Sedimentationsrohr 18 in die Rückhaltevorrichtung 10 einströmt. Der Vorteil der in Fig.2A dargestellten ersten Variante der Rückhaltevorrichtung 10 besteht hingegen darin, dass sich diese Rückhaltevorrichtung durch relativ einfache Umformprozesse, wie beispielsweise Biegen, oder auch als einfache Schweißkonstruktion herstellen lässt.

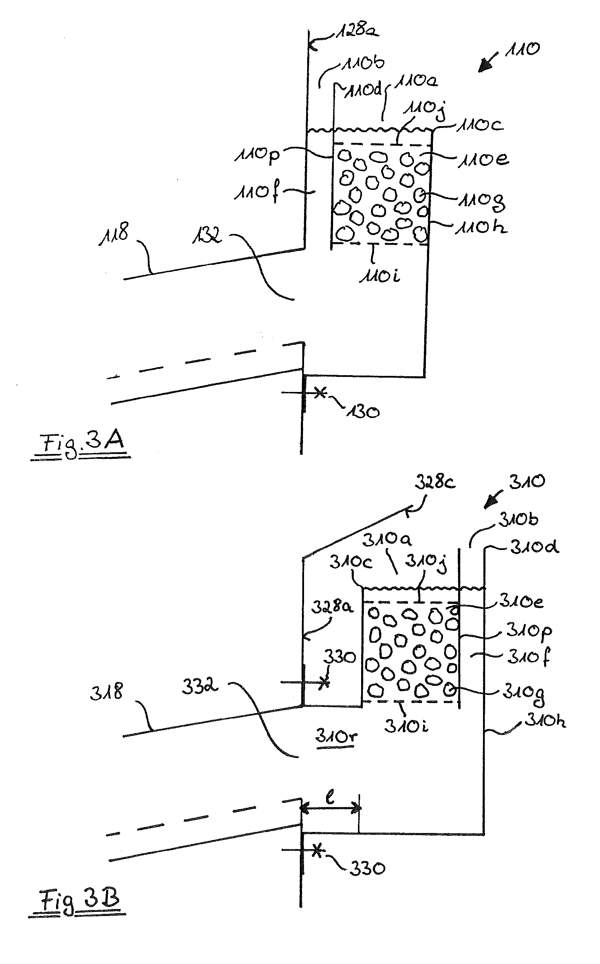

Fig. 3A zeigt eine grobschematische Darstellung einer zweiten Ausführungsform der erfindungsgemäßen Rückhaltevorrichtung, die mit einer Abwasserbehandlungsanordnung als Konstruktionseinheit gebildet ist. Dabei ist in Fig. 3A, anders als in Fig. 1, nicht die gesamte Abwasserbehandlungsanordnung dargestellt, sondern nur die Rückhaltevorrichtung und die unmittelbar an sie angrenzende Umgebung. Die Ausführungsform gemäß Fig. 3A unterscheidet sich lediglich hinsichtlich bestimmter Details von der Ausführungsform gemäß Fig. 1. Daher sind in Fig. 3A analoge Teile mit den gleichen Bezugszeichen versehen wie in Fig. 1, jedoch vermehrt um die Zahl 100. Ferner wird die Ausführungsform gemäß Fig. 3A im Folgenden nur insoweit beschrieben, als sie sich von der Ausführungsform gemäß Fig. 1 unterscheidet, auf deren Beschreibung hiermit ansonsten ausdrücklich verwiesen sei.

Die erfindungsgemäße Rückhaltevorrichtung der zweiten Ausführungsform ist in Fig. 3A allgemein mit 110 bezeichnet. Auch hier ist die Rückhaltevorrichtung 110 wieder an einer sich im Wesentlichen vertikal erstreckenden Wandung 128a eines Auffangbeckens vermittels einer Mehrzahl von Schraubelementen 130 befestigt, wobei ein (nicht dargestelltes) Dichtelement zwischen Rückhaltevorrichtung 130 und Wandung 128a vorgesehen sein kann. Die Rückhaltevorrichtung 110 ist an einer sich im Wesentlichen vertikal erstreckenden Seitenfläche, welche der Wandung 128a zugewandt ist, offen, so dass Regenwasser, welches ein Sedimentationsrohr 118 durch eine Abwasser-Austrittsöffnung 132 verlässt, in die die Abwasser-Austrittsöffnung 132 zumindest teilweise umschließende Rückhaltevorrichtung 110 einströmen kann.

Im Gegensatz zu der in Fig. 1 gezeigten Rückhaltevorrichtung 10, weist die Rückhaltevorrichtung 110 der zweiten Ausführungsform jedoch nicht nur eine Öffnung 110a im oberen Bereich, sondern zudem noch eine zweite Öffnung 110b auf. Die erste Öffnung 110a wird zumindest abschnittsweise von einem Randabschnitt 110c begrenzt, welcher niedriger angeordnet ist als ein niedrigster Randabschnitt 110d der zweiten Öffnung 110b. Somit stellt der Randabschnitt 110c der ersten Öffnung 110a der Rückhaltevorrichtung 110 für das Regenwasser eine Überlaufkante 110c dar, über welche das Regenwasser in einem Normalbetrieb strömt, um die Rückhaltevorrichtung 110 zu verlassen.

Die Rückhaltevorrichtung 110 umfasst ferner eine Trennwand 110p, deren oberer Rand sowohl die erste Öffnung 110a als auch die zweite Öffnung 110b, zumindest abschnittsweise, begrenzt. Die Trennwand 110p begrenzt ferner auf der einen Seite, zusammen mit der Wandung 128a, zumindest abschnittsweise, einen sich vertikal erstreckenden und relativ schmal ausgebildeten Überdruck-Entlastungskanal 110f, welcher in seinem oberen Bereich in der zweiten Öffnung 110b mündet. Ferner begrenzt die Trennwand 110p auf der anderen Seite, zumindest abschnittsweise, einen im Vergleich zum Überdruck-Entlastungskanal 110f relativ breiten Aufnahmeraum 110e zur Aufnahme eines Abwasserbehandlungsmediums 110g.

Der Aufnahmeraum 110e zur Aufnahme des Abwasserbehandlungsmediums 110g wird ferner von einem Seitenwandungsabschnitt 110h der Rückhaltevorrichtung 110, sowie von einer unteren Rostplatte 110i und einer oberen Rostplatte 110j begrenzt. Das Regenwasser kann durch eine Mehrzahl von Öffnungen, die in der unteren Rostplatte 110i ausgebildet sind, in den Aufnahmeraum 110e einströmen, und diesen durch eine Mehrzahl von Öffnungen, welche in der oberen Rostplatte 110j ausgebildet sind, wieder verlassen. Beim Durchströmen des Aufnahmeraums 110e kommt das Abwasser dabei unweigerlich mit der Oberfläche des Abwasserbehandlungsmediums 110g in Kontakt.

Bei dem Abwasserbehandlungsmedium 110g handelt es sich um ein Filtermaterial, welches sehr feine Partikel im Regenwasser zurückhalten und gleichzeitig auch gelöste Stoffe absorbieren kann. Somit sorgt das Filtermaterial 110g für eine höhere Reinheit des in dem Sedimentationsrohr 118 bereits vorbehandelten Regenwassers.

Ein bekanntes Problem von Anordnungen, bei denen ein derartiges Filtermaterial angesetzt wird, ist, dass infolge der Schwerkraft das Filtermaterial zu komprimieren neigt. Ferner kann es bei den bekannten Anordnungen auch zu der eingangs beschriebenen, unerwünschten Pfadbildung kommen, welche einer gleichmäßigen Durchströmung des Filters entgegenwirkt. Indem jedoch in der erfindungsgemäßen Rückhaltevorrichtung 110 das Filtermaterial 110g in im Wesentlichen vertikaler Richtung von unten nach oben von dem Regenwasser umströmt wird, sorgt das Regenwasser für eine permanente Auflockerung des Filtermaterials 110g. Somit verschlechtert sich der hydraulische Widerstand des Filtermaterials 110g weniger schnell und das Filtermaterial 110g muss infolgedessen seltener häufig gereinigt bzw. ausgewechselt werden. Zudem kann eine gleichmäßige Durchströmung des Filters sichergestellt werden.

Obwohl dies aus den vorstehend genannten Gründen nicht bevorzugt wird, ist anzumerken, dass der Aufnahmeraum 110e für das Abwasserbehandlungsmedium 110g natürlich auch so ausgeführt sein kann, dass das Regenwasser das Filtermaterial 110g zumindest abschnittsweise in einer im Wesentlichen horizontalen Richtung oder zumindest in einer Richtung mit einer horizontalen Komponente umströmt. Es könnte, beispielsweise aus platztechnischen Gründen, sogar daran gedacht werden, dass das Regenwasser das Filtermaterial 110g in vertikaler Richtung von oben nach unten umströmt.

Ein weiteres bekanntes Problem bei Anordnungen, welche ein Filtermaterial verwenden, kann je nach verwendetem Filtermaterial sein, dass die Leistungsfähigkeit des Filtermaterials sich verschlechtert, wenn selbiges nicht permanent befeuchtet bleibt und austrocknet. Da sich jedoch in diesem Ausführungsbeispiel der Aufnahmeraum 110e für das Abwasserbehandlungsmedium 110g in der Rückhaltevorrichtung 110 unterhalb der Überlaufkante 110c befindet, besteht hier, unabhängig von dem verwendetem Filtermaterial, die Gefahr einer Verschlechterung der Leistungsfähigkeit des Filtermaterials nicht.

Wenn das Regenwasser die Rückhaltevorrichtung 110 und den sich darin befindlichen Aufnahmeraum 110e zur Aufnahme des Abwasserbehandlungsmediums 110g durchströmt hat, läuft das Regenwasser in einem normalen Betrieb über die Überlaufkante 110c der Rückhaltevorrichtung 110.

Für den Fall jedoch, dass sich das Filtermaterial 110g mit der Zeit stark zugesetzt hat, oder dass der Abwasserbehandlungsanordnung, beispielsweise aufgrund eines Starkregenereignisses, in sehr kurzer Zeit außergewöhnlich große Mengen an zu behandelndem Regenwasser zugeführt wird, so dass aufgrund des hydraulischen Widerstands der Filterpackung die der Abwasserbehandlungsanordnung zugeführte Regenwassermenge nicht im gleichen Maße zeitnah den Aufnahmeraum 110e zur Aufnahme des Abwasserbehandlungsmediums 110g durchströmen kann, droht die Gefahr eines Rückstaus in dem strömungstechnisch der Abwasserbehandlungsanordnung 12 vorgelagerten Bereich.

Um dieser Gefahr zu begegnen, ist an der Rückhaltevorrichtung 110 der Überdruck-Entlastungskanal 110f vorgesehen. Steigt der Druck in dem der unteren Rostplatte 110i strömungstechnisch vorgelagerten Bereich stark an, so kann das Regenwasser in dem Überdruck-Entlastungskanal 110f, wo kein Abwasserbehandlungsmedium vorgesehen ist, aufsteigen, bis es die Höhe des niedrigsten Randabschnitts 110d der zweiten Öffnung 110b erreicht, um dann über diesen Randabschnitt 110d zu strömen und somit die Rückhaltevorrichtung 110 zu verlassen. Dabei wird in Kauf genommen, dass in derartigen Extremsituationen, zumindest ein Teil des Regenwassers die Regenwasserbehandlungsanordnung 12 verlassen kann, ohne zuvor an dem Filtermaterial 110g vorbeigeführt worden zu sein.

Fig.3B zeigt eine grobschematische Darstellung einer Variante der in Fig. 3A gezeigten zweiten Ausführungsform der erfindungsgemäßen Rückhaltevorrichtung. Die Ausführungsform gemäß Fig. 3B unterscheidet sich lediglich hinsichtlich bestimmter Details von den Ausführungsformen gemäß Fig. 3A. Daher sind in Fig. 3B analoge Teile mit den gleichen Bezugszeichen versehen wie in der Fig. 3A, jedoch vermehrt um die Zahl 200. Ferner wird die Ausführungsform gemäß Fig. 3B im Folgenden nur insoweit beschrieben, als sie sich von der Ausführungsform gemäß der Fig. 3A unterscheidet, auf deren Beschreibung hiermit ansonsten ausdrücklich verwiesen sei.

Die in Fig.3B dargestellte Variante einer erfindungsgemäßen Rückhaltevorrichtung 310 unterscheidet sich von der in Fig. 3A dargestellten Ausführungsform im Wesentlichen nur in zwei Gesichtspunkten. Gemäß dem ersten Gesichtspunkt umfasst die Rückhaltevorrichtung 310 einen sich im Wesentlichen horizontal erstreckenden Rohrabschnitt 310r, welcher in diesem Ausführungsbeispiel mit einem im Wesentlichen kreisrunden Strömungsquerschnitt ausgebildet ist und als Abstandsstück dient. Der Rohrabschnitt 310r weist dabei eine effektive Länge I auf, um welche ein den Aufnahmeraum 310e umfassender Hauptabschnitt der Rückhaltevorrichtung 310 von der sich im Wesentlichen vertikal erstreckenden Wandung 328a eines Auffangbeckens beabstandet wird. Das aus der Abwasser-Austrittsöffnung 332 austretende Abwasser durchströmt somit zunächst den Rohrabschnitt 310r, bevor es in den Hauptabschnitt der Rückhaltevorrichtung 310 eintritt. Die Länge I des Rohrabschnitts 310r ist dabei so gewählt, dass die Rückhaltevorrichtung 310 problemlos in einer bereits vorhandenen Abwasserbehandlungsanordnung nachrüstbar ist. Wie in Fig. 3B gezeigt, kann nämlich beispielsweise der freie Raum unmittelbar oberhalb der Abwasser-Austrittsöffnung 332 dadurch begrenzt sein, dass dort die sich im Wesentlichen vertikal erstreckende Wandung 328a in eine geneigte Wandung 328c übergeht. Durch das Vorsehen des als Abstandsstück dienenden Rohrabschnitts 310r kann eine Bauraumkollision zwischen einem Abschnitt der Rückhaltevorrichtung 310, insbesondere einem Abschnitt des Überdruck-Entlastungskanals 310f, und der geneigten Wandung 328c des Auffangbeckens auf einfache Weise vermieden werden.

Gemäß dem zweiten Gesichtspunkt, kann als alternative oder, wie in der in Fig. 3B dargestellten Variante, zusätzliche Maßnahme, um eine Kollision zwischen einem Abschnitt des Überdruck-Entlastungskanals 310f mit der geneigten Wandung 328c zu vermeiden, der Überdruck-Entlastungskanal 310f auf der der Abwasser-Austrittsöffnung 332 abgewandten Seite der Rückhaltevorrichtung 310 angeordnet sein, anstelle, wie in Fig. 3A gezeigt, auf der der Abwasser-Austrittsöffnung 132 zugewandten Seite. Dafür befindet sich in der in Fig. 3B dargestellten Variante die Überlaufkante 310c auf der der Abwasser-Austrittsöffnung 332 zugewandten Seite der Rückhaltevorrichtung 310. Es sei an dieser Stelle noch angemerkt, dass prinzipiell der Überdruck-Entlastungskanal natürlich auch an einer der anderen, seitlichen Wandungsflächen der Rückhaltevorrichtung vorgesehen sein kann.

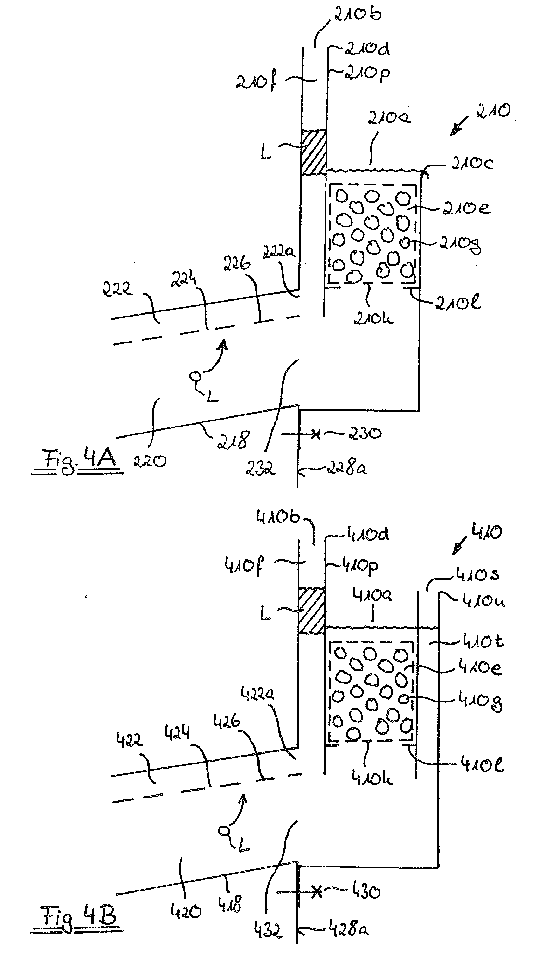

Fig. 4A zeigt eine grobschematische Darstellung einer dritten Ausführungsform der erfindungsgemäßen Rückhaltevorrichtung, die mit einer Abwasserbehandlungsanordnung als Konstruktionseinheit gebildet ist. Dabei ist in Fig. 4A, so wie in den Figuren 3A und 3B, nicht die gesamte Abwasserbehandlungsanordnung dargestellt, sondern nur die Rückhaltevorrichtung und die unmittelbar an sie angrenzende Umgebung. Die Ausführungsform gemäß Fig. 4A unterscheidet sich lediglich hinsichtlich bestimmter Details von den Ausführungsformen gemäß den Figuren 1, 3A und 3B. Daher sind in Fig. 4A analoge Teile mit den gleichen Bezugszeichen versehen wie in den Figuren 1, 3A und 3B, jedoch vermehrt um die Zahl 200 bzw. 100, bzw. vermindert um die Zahl 100. Ferner wird die Ausführungsform gemäß Fig. 4A im Folgenden nur insoweit beschrieben, als sie sich von den Ausführungsformen gemäß den Figuren 1, 3A und 3B unterscheidet, auf deren Beschreibung hiermit ansonsten ausdrücklich verwiesen sei.

Die erfindungsgemäße Rückhaltevorrichtung der dritten Ausführungsform ist in Fig.4A allgemein mit 210 bezeichnet. Auch hier ist die Rückhaltevorrichtung 210 wieder an einer sich im Wesentlichen vertikal erstreckenden Wandung 228a eines Auffangbeckens vermittels einer Mehrzahl von Schraubelementen 230 befestigt, wobei ein (nicht dargestelltes) Dichtelement zwischen Rückhaltevorrichtung 230 und Wandung 228a vorgesehen sein kann. Die Rückhaltevorrichtung 210 ist an einer sich im Wesentlichen vertikal erstreckenden Seitenfläche, welche der Wandung 228a zugewandt ist, offen, so dass Regenwasser, welches ein Abwasserbehandlungsrohr 218 durch eine Abwasser-Austrittsöffnung 232 verlässt, in die die Abwasser-Austrittsöffnung 232 zumindest teilweise umschließende Rückhaltevorrichtung 210 einströmen kann.

Ein Unterschied zwischen der in Fig. 4A gezeigten Abwasserbehandlungsanordnung und den zuvor gezeigten Abwasserbehandlungsanordnungen besteht darin, dass das Abwasserbehandlungsrohr 218 hier kein Sedimentationsrohr, sondern ein Leichtstoffabscheiderohr 218 zur Abscheidung von Leichtstoffen aus dem Regenwasser ist. Der Aufbau und die Funktion des Leichtstoffabscheiderohrs 218 entsprechen jenem, welches in der EP 09 002 449.8 dargestellt und beschrieben ist. Die den Aufbau und die Funktion des Leichtstoffabscheiderohrs betreffende Offenbarung der EP 09 002 449.8 werden daher, wie eingangs bereits erwähnt, hiermit vollinhaltlich in Bezug genommen und zum Teil der Offenbarung der vorliegenden Anmeldung gemacht.

Das Leichtstoffabscheiderohr 218 umfasst einen Strömungsraum 220 und einen als Leichtstoffabscheideraum 222 ausgebildeten strömungsberuhigten Sammelraum. Der Leichtstoffabscheideraum 222 ist von dem Strömungsraum 220 durch einen mit Durchbrechungen 224 versehenen Strömungstrenner 226 abgetrennt. Durch die Durchbrechungen 224 können Leichtstoffe L, welche zusammen mit dem Regenwasser durch den Strömungsraum 120 eingeleitet worden sind, in den Leichtstoffabscheideraum 222 gelangen und dort bis zu einem höchsten Bereich 222a des Leichtstoffabscheideraums 222 aufsteigen.

Die Rückhaltevorrichtung 210 ist an die besonderen Anforderungen, welche die Abwasserbehandlungsanordnung zur Abscheidung von Leichtstoffen aus dem Regenwasser mit sich bringt, angepasst. Insbesondere liegt ein niedrigster Randabschnitt 210d einer zweiten Öffnung 210b der Rückhaltevorrichtung 210 nicht unterhalb des in Fig. 1 gezeigten Zulaufs 14, sondern ist wesentlich höher angeordnet. Der somit, zumindest teilweise, von einer Wandung 228a und von einer Trennwand 210p gebildete, schmale, sich vertikal erstreckende Kanal 210f fungiert in dieser Ausführungsform nicht als Überdruck-Entlastungskanal, sondern als Leichtstoff-Absaugkanal 210f. Dieser Kanal 210f steht dabei mit dem am höchsten gelegenen Bereich 222a des Leichtstoffabscheideraums 222 derart in Verbindung, dass sich Leichtstoffe L, welche zuvor in den Leichtstoffabscheideraum 222 des Leichtstoffabscheiderohrs 218 eingetreten und in diesem bis zu dem dem am höchsten gelegenen Bereich 222a aufgestiegen sind, in diesem Kanal 210f sammeln können. Die in dem Leichtstoff-Absaugkanal 210f angesammelten Leichtstoffe L können dann in regelmäßigen Zeitintervallen abgesaugt und einer umweltgerechten Entsorgung zugeführt werden.

Ferner unterscheidet sich die Rückhaltevorrichtung 210 der dritten Ausführungsform von der Rückhaltevorrichtung 110 der zweiten Ausführungsform auch darin, dass ein Aufnahmeraum 210e zur Aufnahme eines Abwasserbehandlungsmediums 210g, insbesondere eines Filtermaterials 210g, vollständig von einem wasserdurchlässigen Behälter, d.h. in diesem Fall von einem Drahtkorb 210k, umgeben ist. Dieser Drahtkorb 210k liegt mit seinem unteren Umfangsrand auf einer sich horizontal erstreckenden Lochblende 2101 in der Rückhaltevorrichtung 210 auf. Durch die Öffnung der Lochblende 2101 kann das Regenwasser von unten in den Aufnahmeraum 210e zur Aufnahme des Filtermaterials 210g eindringen. Vermittels des Drahtkorbs 210k kann das Filtermaterial 210g auf einfache Weise, beispielsweise mittels eines (nicht dargestellten) Seiles, von oben in die Rückhaltevorrichtung 210 herabgelassen werden, bzw. aus der Rückhaltevorrichtung 210 herausgezogen werden. Um dabei das Einführen des das Filtermaterial 210g umfassenden Drahtkorbes 210k in die Rückhaltevorrichtung 210 zu erleichtern, ist ein Randabschnitt 210c einer ersten Öffnung 210a der Rückhaltevorrichtung 210, welcher die Überlaufkante 210c darstellt, umgebogen. Somit kann der Drahtkorb 210k leichter in den Aufnahmeraum 210e hineinrutschen. Die Überlaufkante kann dabei auf verschiedene Arten umgebogen sein, um für den Drahtkorb 210k eine Einführungsschräge aufzuweisen.

Fig.4B zeigt eine grobschematische Darstellung einer Variante der in Fig. 4A gezeigten dritten Ausführungsform der erfindungsgemäßen Rückhaltevorrichtung. Die Ausführungsform gemäß Fig. 4B unterscheidet sich lediglich hinsichtlich bestimmter Details von der Ausführungsform gemäß der Fig. 4A. Daher sind in Fig. 4B analoge Teile mit den gleichen Bezugszeichen versehen wie in der Fig. 4A, jedoch vermehrt um die Zahl 200. Ferner wird die Ausführungsform gemäß Fig. 4B im Folgenden nur insoweit beschrieben, als sie sich von der Ausführungsform gemäß der Fig. 4A unterscheidet, auf deren Beschreibung hiermit ansonsten ausdrücklich verwiesen sei.

Die in Fig. 4B dargestellte Variante einer erfindungsgemäßen Rückhaltevorrichtung 410 unterscheidet sich von der in Fig.4A dargestellten Ausführungsform im Wesentlichen nur darin, dass die Rückhaltevorrichtung 410 zusätzlich zu der ersten Öffnung 410a, welche wenigstens einer in Fig.4B nicht gezeigten Überlaufkante zugeordnet ist, und der zweiten Öffnung 410b, welche einem Leichtstoff-Absaugkanal 410f zugeordnet ist, ferner noch eine dritte Öffnung 410s aufweist, welche einem Überdruck-Entlastungskanal 410t zugeordnet ist. Die wenigstens eine in Fig. 4B nicht dargestellte Überlaufkante, über welche das Abwasser in einem normalen Betriebszustand die Rückhaltevorrichtung 410 verlässt, ist an einem Abschnitt einer ebenfalls nicht dargestellten seitlichen Wandungsfläche zwischen dem Leichtstoff-Absaugkanal 410f und dem Überdruck-Entlastungskanal 410t auf Höhe des in Fig. 4B gezeigten Wasserstands vorgesehen.

Der Aufbau und die Funktionsweise des Überdruck-Entlastungskanals 410t entspricht demjenigen bzw. derjenigen von den Ausführungsbeispielen, welche in den Figuren 3A und 3B dargestellten sind, auf deren Beschreibung hiermit verwiesen wird. Anzumerken bleibt, dass ein den Überdruck-Entlastungskanal 410t begrenzender Randabschnitt 410u deutlich unterhalb eines den Leichtstoff-Absaugkanal 410f begrenzenden Randabschnitts 410d angeordnet ist. Hierdurch wird sichergestellt, dass auch im Falle eines Starkregenereignisses oder im Falle eines zugesetzten Filters, wenn zumindest ein Teil des Abwassers die Rückhaltevorrichtung 410 durch die dritte Öffnung 410s des Überdruck-Entlastungskanals 410t verlässt, um die Gefahr eines unzulässigen Rückstaus von Regenwasser in dem Bereich, welcher der Abwasserbehandlungsanordnung 112 strömungstechnisch vorgelagert ist, zuverlässig zu vermeiden, die im Leichtstoff-Absaugkanal 410f angesammelte Leichtflüssigkeit L die Rückhaltevorrichtung 410 nicht verlassen kann, insbesondere nicht in das strömungstechnisch der Rückhaltevorrichtung 410 nachgelagerte Auffangbecken gelangen kann.

Dadurch, dass die in den Figuren 3A, 3B, 4A und 4B gezeigten Ausführungsbeispiele der erfindungsgemäßen Rückhaltevorrichtung 110, 310, 210 bzw. 410 einen Aufnahmeraum 110e, 310e, 210e, 410e zur Aufnahme eines Abwasserbehandlungsmediums 110g, 310g, 210g, 410g, wie oben gezeigt, aufweisen, kann die Behandlungsintensität des Abwassers je nach zu erwartendem Verschmutzungsgrad des Regenwassers, welcher beispielsweise durch eine stark befahrene Straße oder einen Kreuzungsbereich sehr hoch sein kann, auf die jeweiligen Anforderungen an den Gewässserschutz hin eingestellt werden. Im einfachsten Fall braucht gar kein Filter in dem Aufnahmeraum 110e, 310e, 210e, 410e vorgesehen zu werden. Andernfalls kann jedoch der Aufbau, d.h. etwa die Anzahl der Schichten, Schichtstärke, Körnung, Material, etc., des Filters auf einfache Weise graduell an die jeweilige Situation angepasst werden.

Nachzutragen bleibt noch, dass die Abwasserbehandlungsanordnung selbstverständlich sowohl ein Sedimentationsrohr als auch ein Leichtstoffabscheiderohr umfassen kann, bzw. dass ein und dasselbe Abwasserbehandlungsrohr als beides ausgebildet sein kann.

## Patentansprüche

1. Rückhaltevorrichtung (10; 110; 210; 310; 410) zur Anbringung an einer sich im Wesentlichen vertikal erstreckenden Wandung (28a; 128a; 228a; 328a; 428a) einer Abwasserbehandlungsanordnung (12), wobei die Rückhaltevorrichtung (10; 110; 210; 310; 410) in einer sich im Wesentlichen vertikal erstreckenden Seitenfläche zur Ermöglichung des Eintritts von Abwasser eine Wandung mit einer Öffnung aufweist oder an dieser Seitenfläche offen ist, und wobei die Rückhaltevorrichtung (10; 110; 210; 310; 410) zur Ermöglichung eines Austritts des Abwassers wenigstens eine Überlaufkante (10c; 110c; 210c; 310c) aufweist.

2. Rückhaltevorrichtung (310) nach Anspruch 1,
**dadurch gekennzeichnet, dass** die Rückhaltevorrichtung (310) einen sich im montierten Zustand im Wesentlichen horizontal erstreckenden Rohrabschnitt (310r) umfasst, welcher von in die Rückhaltevorrichtung (310) eintretendem Abwasser durchströmt wird.

3. Rückhaltevorrichtung (10; 110; 210; 310; 410) nach Anspruch 1 oder 2,
**dadurch gekennzeichnet, dass** die Gestalt der Rückhaltevorrichtung (10; 110; 210; 310; 410) eine einfache geometrische Grundform aufweist, beispielsweise die Form eines Quaders oder einer Viertelkugel oder eines Halbzylinders, oder von einer derartigen einfachen geometrischen Grundform abgeleitet ist.

4. Rückhaltevorrichtung (110; 210; 310; 410) nach einem der vorhergehenden Ansprüche,
**dadurch gekennzeichnet, dass** sie einen Aufnahmeraum (110e; 210e; 310e; 410e) zur Aufnahme eines Abwasserbehandlungsmediums (110g; 210g; 310g; 410g) umfasst, wobei der Aufnahmeraum (110e; 210e; 310e; 310e) derart ausgebildet und/oder angeordnet ist, dass er zumindest von einem Teil des Abwassers, vorzugsweise von dem gesamten Abwasser, durchströmt wird.

5. Rückhaltevorrichtung (110; 210; 310; 410) nach Anspruch 4,
**dadurch gekennzeichnet, dass** der Aufnahmeraum (110e; 210e; 310e; 410e) zumindest abschnittsweise von einem Rost (110i, 110j; 210k; 310i, 310j; 410k) begrenzt ist.

6. Rückhaltevorrichtung (110; 210; 310; 410) nach einem der vorhergehenden Ansprüche,
**dadurch gekennzeichnet, dass** die Rückhaltevorrichtung (110; 210; 310; 410) in einem oberen Bereich wenigstens zwei voneinander getrennte Öffnungen (110a, 110b; 210a, 210b; 310a, 310b; 410a, 410b, 410s) aufweist, mittels derer ein von dem Abwasser durchströmter Innenraum der Rückhaltevorrichtung (110; 210; 310; 410) mit der äußeren Umgebung in Verbindung steht, wobei wenigstens eine der Öffnungen (110a; 210a; 310a; 410a) zumindest abschnittsweise von einer Begrenzungskante (110c; 210c; 310c) begrenzt ist, die niedriger angeordnet ist als eine niedrigste Begrenzungskante (110d; 210d; 310d; 410u) der anderen Öffnungen (110b; 210b; 310b; 410b, 410s) und somit die wenigstens eine Überlaufkante (110c; 210c; 310c) bildet.

7. Konstruktionseinheit gebildet aus einer Abwasserbehandlungsanordnung (12) und einer Rückhaltevorrichtung (10; 110; 210; 310; 410) nach einem der vorhergehenden Ansprüche,
**dadurch gekennzeichnet, dass** die sich im Wesentlichen vertikal erstreckende Wandung (28a; 128a; 228a; 328a; 428a) der Abwasserbehandlungsanordnung (12) wenigstens eine Abwasser-Austrittsöffnung (32; 132; 232; 332; 432) aufweist, aus der in die Rückhaltevorrichtung (10; 110; 210; 310; 410) eintretendes Wasser austritt, wobei die wenigstens eine Überlaufkante (10c; 110c; 210c; 310c) der Rückhaltevorrichtung (10; 110; 210; 310; 410) höher als ein am tiefsten gelegener Bereich, der wenigstens einen Abwasser-Austrittsöffnung (32; 132; 232; 332; 432) der Abwasserbehandlungsanordnung (10; 110; 210; 310; 410) angeordnet ist.

8. Konstruktionseinheit nach Anspruch 7,
**dadurch gekennzeichnet, dass** die wenigstens eine Überlaufkante (10c; 110c; 210c; 310c) der Rückhaltevorrichtung (10; 110; 210; 310; 410) höher als ein am höchsten gelegener Bereich, der wenigstens einen Abwasser-Austrittsöffnung (32; 132; 232; 332; 432) der Abwasserbehandlungsanordnung (10; 110; 210; 310; 410) angeordnet ist.
